# EUROPEAN PATENT APPLICATION

(11) **EP 4 513 361 A1**
(43) Date of publication of application: **26.02.2025**
(21) Application number: 24190573.6
(22) Date of filing: 24.07.2024
(51) Int. Cl.: G06F 21/12, H04L 9/00, H04L 9/40, H04L 67/12, H04W 4/40, H04W 4/80, H04W 12/047, H04W 12/069, H04W 12/50, H04W 12/60, G06F 21/14, G06F 21/51

(54) **DIGITAL KEY CONTROL SYSTEM**

(30) Priority: 24.08.2023 CN 202311075554
(71) Applicant: Irdeto B.V., 2132 LS Hoofddorp (NL)
(72) Inventor: WANG, Bo, 2132 LS Hoofddorp (NL); GAO, Yansong, 2132 LS Hoofddorp (NL); ZHOU, Xiangdong, 2132 LS Hoofddorp (NL); WU, Liyong, 2132 LS Hoofddorp (NL); HU, Haiyan, 2132 LS Hoofddorp (NL); BU, Xianglong, 2132 LS Hoofddorp (NL); CAI, Yaozhang, 2132 LS Hoofddorp (NL)
(74) Representative: Boult Wade Tennant LLP

(57) **Abstract**

A control system for use at a mobile device to control a digital key system of a vehicle, wherein the digital key system is implemented according to a predetermined vehicle digital key specification to enable one or more vehicle functions to be performed at the vehicle without using a physical key for the vehicle, and wherein the control system, when executed by a processor of the mobile device, is arranged to: communicate, in accordance with the predetermined vehicle digital key specification, with the digital key system via at least one short range communication protocol to cause performance of at least one of the one or more vehicle functions; and provide a secured software runtime environment at the mobile device for the control system to perform one or more secured operations, the one or more secured operations including the control system acting as a software root of trust, in accordance with the predetermined vehicle digital key specification, for performance of at least one of the one or more vehicle functions.

## Description

### Field of the invention

The present invention relates to a control system for use at a mobile device to control a digital key system of a vehicle.

### Background of the invention

Keyless systems (also known as remote keyless systems or keyless vehicle systems) have been widely adopted in the automotive field for both consumer and commercial vehicles, such as for one or more of: (i) keyless entry/access to the vehicle; (ii) keyless ignition of the vehicle's engine; (iii) keyless starting of an electric vehicle's motor; etc. Such keyless systems replace the need for a physical key to unlock a physical lock - instead, a keyless remote (or passive fob) is used to authorize the unlocking (or another function) of the vehicle based on the keyless remote's proximity to (or presence within) the vehicle itself. Such keyless remotes typically communicate with the vehicle via short-range radio transmissions, with the keyless remote acting as a transponder.

Such systems provide improved convenience for users who are able to enter and often start a vehicle without having to interact with the keyless remote, which merely needs to be present with the user. They also provide reliability improvements over physical lock- and-key systems where weather conditions (such as low temperatures) can cause physical locks to become inoperable, for example due to icing of the keyhole.

A disadvantage of remote keyless systems is that traditionally they have required dedicated hardware, in the form of the keyless remote for each particular vehicle. Furthermore, to maintain security of the system, the initial secure pairing of the keyless remote and the vehicle is typically carried out by the original equipment manufacturer (OEM) - however, this makes replacement or repair of keyless remotes difficult and costly.

Recent developments of remote keyless systems have enabled generic mobile devices (such as smartphones) to take the role of the keyless remote, often using built in communication systems or protocols such as Near Field Communication (NFC) or Bluetooth. This has been driven, in part, by the changing needs and attitudes of drivers' desire of using a smart device as a key to allow them to lock, unlock, start the engine and share access to the vehicle, etc. Such mobile devices may store and use a digital key, where the digital key is used to interact with a keyless vehicle system at the vehicle to provide such (physical) keyless functionality for the vehicle.

One digital key protocol is provided by the Car Connectivity Consortium (CCC). The CCC is a cross-industry standards organization aiming to create systems that standardize interface technologies to provide consistently good user experiences across vehicles and mobile devices. The CCC members include companies, such as smartphone manufacturers, vehicle manufacturers, automotive tier-1 suppliers, silicon/chip vendors, security product suppliers, and others. The CCC has released various specifications aimed at achieving the above goal. More details of the CCC and the CCC specification can be found, for example, at https://carconnectivity.org/about/ and https://carconnectivity.org/digital-key-release-3-0-specification-download/, the entire disclosures of which are incorporated herein by reference.

There have been various releases of the CCC specification:
- **June 2018 release digital key 1.0** : The Release 1.0 specification provides a generalized deployment method that allows vehicle OEMs to securely transfer a digital key implementation to a mobile device, using an existing Trusted Service Manager (TSM) infrastructure. Security for vehicle access is provided by leveraging NFC distance bounding and a direct link to the secure element of the mobile device.
- **May 2020 release digital key 2.0** : The Release 2.0 specification is based on the use of NFC as an underlying radio technology to enable digital key services. In principal, this digital key management framework is designed to be radio technologies agnostic, enabling the framework to be extended to support other technologies.
- **July 2021 release digital key 3.0** : The Release 3.0 specification extends the Release 2.0 specification, by adopting (in addition to NFC) Bluetooth Low Energy (BLE) in combination with Ultra-Wideband (UWB) wireless connectivity technologies to enable location-aware features for provision of digital key functionality and to allow secure positioning with accuracy equal to or better than existing passive key fobs.

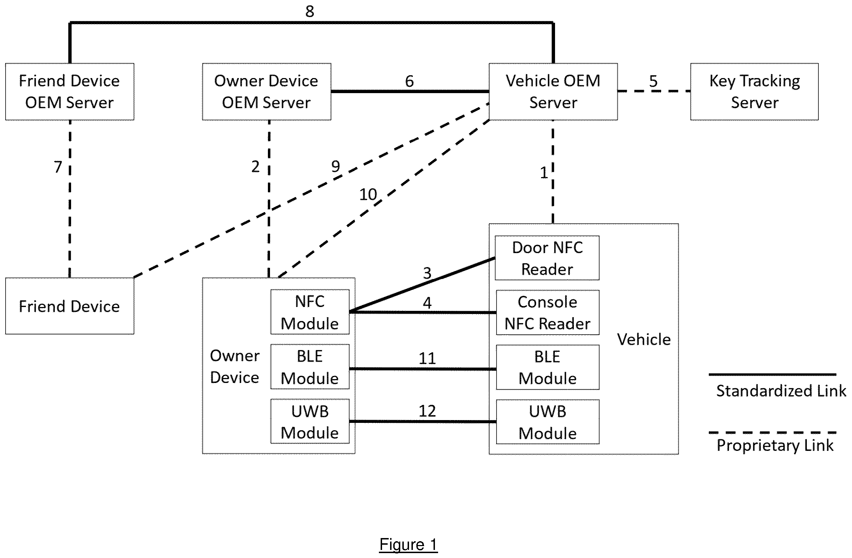

Figure 1 of the accompanying drawings schematically illustrates the digital key system according to the CCC specification. This system consists of multiple actors/entities that are connected to each other using various links (or connections or interfaces), in particular standardized links (solid connecting lines in figure 1) and/or proprietary links (dashed connecting lines in figure 1). The standardized links are fully specified in the CCC specification to enable implementation and interoperability. The entities, standardized links, and proprietary links are described below to provide an overview of the high-level functionalities of the system. Further detail can, of course, be found in the CCC specification as necessary and it will, of course, be appreciated that the person skilled in this field of technology will be well versed in such a traditional CCC system.
- In the system, the **Vehicle** is linked to the **Vehicle OEM Server** via Telematics link 1. This link provides a secure communication channel and is fully controlled by the Vehicle OEM.
- The **Vehicle** is equipped with **NFC Readers** and optional **Bluetooth (BLE) and/or UWB** modules to communicate with mobile devices for owner pairing, vehicle locking/unlocking, and engine start via links **3, 4** in the case of NFC connectivity, or links **11, 12** in the case of BLE/UWB connectivity.
- The **Owner Device** (or mobile device) communicates with the **Owner Device OEM Server** using a proprietary link/method **2.** The **Owner Device** can also communicate directly with the **Vehicle OEM Server** using a proprietary Vehicle OEM application interface, over link **10.** Similarly, the **Friend Device** (another mobile device) can communicate directly with the **Vehicle OEM Server** using a proprietary Vehicle OEM application interface, over link **9.**
- The **Owner/Friend Device OEM Server** is responsible for managing the life cycle of a digital key applet of the **Owner/Friend Device** respectively, and for updating necessary digital certificates in the **Owner/Friend Device** respectively, via links **2/7** respectively. It can provide services to suspend, restore, and wipe digital keys when a mobile device is lost or stolen.
- The **Vehicle OEM Server** hosts user accounts and manages identification and verification functionality (e.g. for the **Vehicle** and/or the **Owner/Friend Device**)**.** It may also connect to an optional **Key Tracking Server** via link **5** to register issued digital keys for a vehicle, e.g. to help preserve/ensure privacy of stored information (digital keys).
- The **Owner Device OEM Server** is not directly connected to the other **Device OEM Servers.**
- The **Owner Device** can share a digital key with the **Friend Device** (via links **2, 6, 8 and 7**), defining the appropriate access profile, and can terminate the shared digital key when sharing of the digital key is no longer needed/desired. The **Friend Device** can host digital keys shared by the owner but cannot re-share such as shared digital key with any other mobile device.
- The **Friend Device** and its **Friend Device OEM Server** link **7** support necessary certificate services, as in link 2. The Device OEM or Vehicle OEM can facilitate device change, but this is out of the scope of the CCC specification.
- The interface between the **Vehicle OEM Server** and the **Owner/Friend Device OEM Server 6/8** is used to exchange the servers' certificates, key sharing, key tracking, key termination, and notifications.

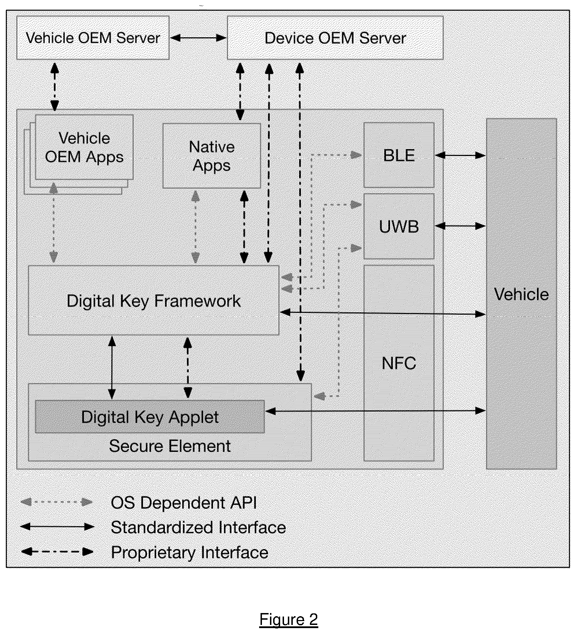

Figure 2 of the accompanying drawings schematically illustrates functional elements of a mobile device participating in the system of figure 1 (e.g. the **Owner Device** or the **Friend Device** of figure 1). In particular the mobile device comprises:
- Secure element (or equivalent)
   ∘ Java Card and GlobalPlatform support
   ∘ GlobalPlatform Card Specification Amendment C and GlobalPlatform Contactless Extension
   ∘ Standard symmetric and asymmetric cryptographic support
   ∘ Hosts Digital Key Applet
- Digital Key Applet
   ∘ Hosts digital keys
   ∘ Implements relevant (fast and standard) transactions
   ∘ Implements Instance CA (conditional access) to support offline use cases and privacy protection
   ∘ Stores immobilizer tokens when required by the vehicle, offline attestations, access profiles, and other data associated with a digital key
   ∘ Verifies identity/authenticity of the vehicle
   ∘ Verifies certificate chain of friend public key
- Digital Key Framework
   ∘ Implements main features: owner pairing, digital key sharing, and management
   ∘ Provides common digital key service functionality via a set of OS-specific APIs for vehicle OEM applications
- Native App
   ∘ Native application for the mobile device that provides device-native user interface such as digital key creation, digital key termination and deletion, digital key enable/disable, etc
   ∘ Displays a list of issued owner/friend digital keys
- Vehicle OEM App
   ∘ The Vehicle OEM application is optional. The main features of the application are supported natively by the device
   ∘ May support the same features as the Native App plus Vehicle OEM-specific features
   ∘ Provides identification and verification with the Vehicle OEM Server
   ∘ Retrieves owner pairing password
   ∘ Manages keys with non-standard access profiles

The CCC system (e.g. as illustrated in figures 1 and 2) uses asymmetric cryptography to mutually authenticate the vehicle and the remote (mobile) device. Public keys are mutually exchanged through pairing of the remote device to the vehicle. The owner/user of the remote device can then authorize the use of digital keys by other users (e.g. friends and family members) by signing the public keys of those other users. The system supports various features, including:
- Security and privacy equivalent to, or better than, physical keys
- Pairing of owner device and vehicle
- Key sharing between owner and other users (e.g. friends)
- Interoperability across devices and vehicle OEMs
- Support of multiple digital keys from different vehicle OEMs on a single mobile device
- Enabling the vehicle OEM to control the issuance of a digital key and its policy
- Privacy protection against active/passive eavesdroppers

Another digital key protocol is provided by the Intelligent Car Connectivity Industry Ecosystem Alliance (ICCE). Some of the main developments and releases by the ICCE are:
- **September 2020** : release of "ICCE Digital Key System Part 1: General Requirements"
- **January 2021** : release of "ICCE Digital Key System Part 2: Bluetooth System Requirements"
- **July 2022** : release of "ICCE Digital Key System Part 3: NFC System Requirements"

More details of the ICCE and the ICCE system definitions can be found at, for example, https://www.icce.cn/web/index and https://www.icce.cn/web/technicalRules?urlData=0 the entire disclosures of which are incorporated herein by reference.

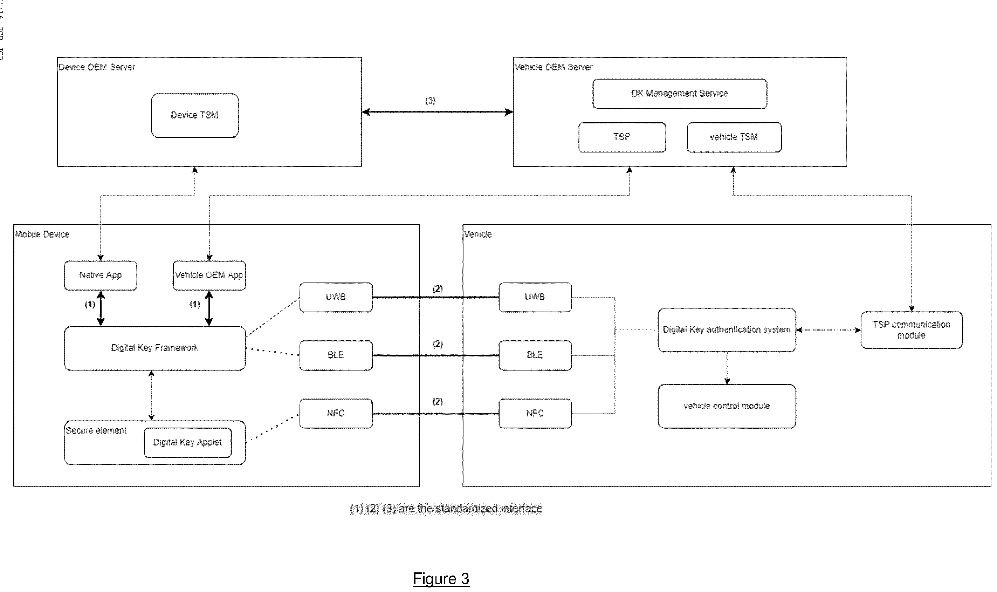

Figure 3 of the accompanying drawings schematically illustrates the digital key system according to the ICCE specification. The ICCE system (as per the ICCE specification), is similar to the CCC system (as per the CCC specification) in some ways, and different in others. For example:
Similarities:
   - The CCC and the ICCE have the same objective: the creation of sustainable and flexible ecosystems that standardize interface technologies to provide consistently good user experiences across vehicles and mobile devices
   - There are similar actors in the systems: vehicle, vehicle NFC reader, vehicle BLE module, vehicle UWB module, vehicle OEM server, device and device OEM server
   - Their standardized interfaces focus on:
      ∘ The mobile device's Digital Key Framework API
      ∘ The Device OEM server and Vehicle OEM server communication interfaces
      ∘ The APDU (Application Protocol Data Unit) message used for the communication between mobile device and vehicle over NFC/BLE/UWB

      - They provide similar features, such as owner pairing, key sharing, passive entry/passive start, RKE (Remote Keyless Entry)
Differences:
   - The CCC specification is a global standard which has more members from device OEM, vehicle OEM, tier 1 and so on, while the ICCE specification currently is a localized standard
   - The CCC specification uses asymmetric cryptography, while the ICCE specification uses symmetric cryptography
   - The ICCE specification defines an independent BLE device key protocol, while the CCC specification does not
   - The CCC and ICCE specifications have different definitions about their standardized interfaces and protocols, and these are not inter-compatible

It will, of course, be appreciated that the person skilled in this field of technology will be well versed in such a traditional ICCE system.

One of the benefits of the CCC and ICCE specifications (protocols/systems) is that they provide a standard, with CCC/ICCE certification respectively. Moreover, for CCC, a single CCC integration at the vehicle supports any CCC-certified device OEM and, likewise, for ICCE, a single ICCE integration at the vehicle supports any ICCE-certificated device OEM. However, there are several drawbacks. For example (i) to utilize the device OEM capabilities (mobile device framework, secure element (SE) and device OEM server), the device OEM will charge the vehicle OEM; (ii) digital key ownership and control does not entirely lie with the vehicle OEM, since key management at the mobile device relies on the device OEM; (iii) legacy mobile devices do not support the CCC and/or ICCE specifications/protocols; (iv) not all device OEMs will choose to support the CCC and/or ICCE specifications/protocols; (v) vehicle OEMs need to integrate and work with each device OEM one by one, which is a substantial technical effort and requires ongoing support (e.g. bug fixing) from each device OEM; (vi) the device OEM may only enable/support a limited amount of vehicle control features, whereas the vehicle OEM may wish to provide a richer set of vehicle control features; (vii) key sharing across different mobile device brands, or across mobile devices running different operating systems, may be difficult, limited or impossible. It would, therefore, be desirable to provide a digital key system for providing (physical) keyless vehicle functionality, whilst addressing some or all of these drawbacks of the existing systems and implementations.

### Summary of the invention

According to a first aspect of the invention, there is provided a control system for use at a mobile device to control a digital key system of a vehicle, wherein the digital key system is implemented according to a predetermined vehicle digital key specification to enable one or more vehicle functions to be performed at the vehicle without using a physical key for the vehicle, and wherein the control system, when executed by a processor of the mobile device, is arranged to: communicate, in accordance with the predetermined vehicle digital key specification, with the digital key system via at least one short range communication protocol to cause performance of at least one of the one or more vehicle functions; and provide a secured software runtime environment at the mobile device for the control system to perform one or more secured operations, the one or more secured operations including the control system acting as a software root of trust, in accordance with the predetermined vehicle digital key specification, for performance of at least one of the one or more vehicle functions.

In some embodiments, the control system is arranged to perform the one or more secured operations independent of any keyless vehicle control functionality provided by a manufacture of the mobile device.

In some embodiments, the control system is arranged to perform the one or more secured operations independent of any keyless vehicle control functionality provided as part of an operating system of the mobile device.

In some embodiments, the control system is arranged to perform the one or more secured operations without using a secure element of the mobile device for: (a) storage of data used for the control of the digital key system; and (b) execution of instructions for implementing the control of the digital key system.

In some embodiments, the secured software runtime environment is provided based on one or more of:
(a) the control system being implemented, at least in part, using whitebox cryptography for (i) securing storage of some or all of the data used for the control of the digital key system; and/or (ii) securing some or all of the instructions used to implement the control system;
(b) the control system being implemented, at least in part, using obfuscation of one or more of: (i) instructions used to implement the control system; (ii) control flow for the control system; and (iii) runtime data of the control system;
(c) the control system comprising one or more secure storage functions for performing secure storage of one or more cryptographic keys and/or sensitive data;
(d) the control system being arranged to perform node locking to lock execution of the control system to the mobile device;
(e) the control system being arranged to perform integrity verification for the control system and/or the digital key system; and
(f) the control system being arranged to perform anti-debug functionality.

In some embodiments, the control system is arranged to cause data received from the vehicle via the at least one short range communication protocol to be routed to the control system instead of being routed to a secure element of the mobile device. In some such embodiments, the control system is arranged perform host card emulation to enable communication of said data from a transceiver of the mobile device that implements the at least one short range communication protocol to the control system.

In some embodiments, the predetermined vehicle digital key specification specifies one or more protocols and/or one or more functions and/or one or more requirements that enable the one or more vehicle functions to be performed at the vehicle without using a physical key for the vehicle.

In some embodiments, the predetermined vehicle digital key specification is one of: (a) a Car Connectivity Consortium specification; and (b) an Intelligent Car Connectivity Industry Ecosystem Alliance specification.

In some embodiments, the one or more vehicle functions comprises one or more of:
(a) physical unlocking and/or physical locking of at least a part of the vehicle;
(b) physical opening and/or physical closing of at least a part of the vehicle;
(c) starting and/or stopping an engine or a motor of the vehicle; and
(d) operating an auxiliary system of the vehicle.

In some embodiments, the at least one short range communication protocol comprises at least one of: a near field communication (NFC) protocol; a Bluetooth Low Energy (BTLE) protocol; and an Ultra-Wideband (UWB) protocol.

In some embodiments, the control system acting as the software root of trust comprises the control system: storing one or more cryptographic keys; and using the one or more cryptographic keys to authenticate one or more digital signatures and/or to issue one or more digital certificates.

In some embodiments, the control system exposes an API configured for receiving, from an application that is user-installable on the mobile device, a command for the control system to cause performance of at least one of the one or more vehicle functions. In some such embodiments, the command is based on input provided to the application by a user of the mobile device. Additionally or alternatively, in some such embodiments, the application is a native application for the mobile device. Additionally or alternatively, in some such embodiments, the application is provided, at least in part, by a manufacturer of the vehicle.

In some embodiments, the one or more secured operations include one or more of:
(a) authenticating an identity of the vehicle and/or an identity of the digital key system in accordance with the predetermined vehicle digital key specification;
(b) enabling the digital key system to authenticate an identity of the mobile device and/or an identity of the control system in accordance with the predetermined vehicle digital key specification;
(c) sharing a digital key secured, at least in part, by the control system with another mobile device;
(d) digital key management for one or more cryptographic keys used in accordance with the predetermined vehicle digital key specification; and
(e) secured storage of data used for performance of at least one of the one or more vehicle functions.

In some embodiments, the control system, when executed by the processor of the mobile device, is arranged to bind with the vehicle, said binding controlled by a server in communication with the control system.

In some embodiments, the mobile device is a smartphone.

According to a second aspect of the invention, there is provided an application, installable by a user on a mobile device, that comprises the control system according to the above-mentioned first aspect (or any embodiment thereof).

According to a third aspect of the invention, there is provided an application, installable by a user on a mobile device, configured to provide, to the control system according to the above-mentioned first aspect (or any embodiment thereof), one or more commands for the control system to cause performance of at the least one of the one or more vehicle functions.

According to a fourth aspect of the invention, there is provided a mobile device comprising the control system according to the above-mentioned first aspect (or any embodiment thereof) and/or having installed thereon the application according to the above-mentioned second aspect or third aspect.

According to a fifth aspect of the invention, there is provided a computer readable medium storing a set of instructions that, together, implement the control system according to the above-mentioned first aspect (or any embodiment thereof).

### Brief description of the drawings

Embodiments of the invention will now be described, by way of example only, with reference to the accompanying drawings, in which:
Figure 1 schematically illustrates the digital key system according to the CCC specification;
Figure 2 schematically illustrates functional elements of a mobile device participating in the system of figure 1;
Figure 3 schematically illustrates the digital key system according to the ICCE specification;
Figure 4 schematically illustrates a system according to an embodiment of the invention;
Figure 5a schematically illustrates an example hardware implementation of a computer system suitable for a server;
Figure 5b schematically illustrates an example hardware implementation of a mobile device; and
Figure 6 schematically illustrates a specific example of an embodiment of the invention, configured for use with the Android operating system of a mobile device in relation to a CCC system.

### Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

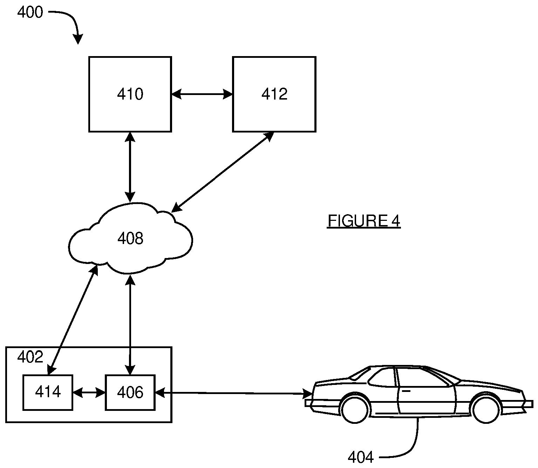

Figure 4 schematically illustrates a system 400 according to an embodiment of the invention. The system 400 comprises a mobile device 402 and a vehicle 404. The mobile device 402 may, for example, be a smartphone. The mobile device 402 is "mobile" in the sense that it for carrying/wearing/holding by a (human) operator. The vehicle 404 may be any consumer or commercial vehicle, such as a car, a van, a lorry, a campervan, a motorbike etc.

The vehicle 404 comprises a digital key system (not shown in figure 4) that is implemented according to a predetermined vehicle digital key specification. This predetermined vehicle digital key specification is to enable one or more vehicle functions to be performed at the vehicle 404 without using a physical key for the vehicle 404. For example, this predetermined vehicle digital key specification specifies one or more protocols and/or one or more functions and/or one or more requirements that enable the one or more vehicle functions to be performed at the vehicle 404 without using a physical key for the vehicle 404 - for example, the predetermined vehicle digital key specification may be a CCC specification or an ICCE specification, as have been discussed above, although it will be appreciated that any other digital key standard or specification could be used instead (either currently known or developed in the future). Thus, the vehicle's digital key system provides keyless functionality at the vehicle 404 as has been discussed above. Likewise, these one or more vehicle functions may comprise one or more of: (a) physical unlocking and/or physical locking of at least a part of the vehicle 404 (e.g. one or more doors, the boot/trunk, a glovebox/compartment, etc.); (b) physical opening and/or physical closing of at least a part of the vehicle 404 (e.g. one or more doors, the boot/trunk, a glovebox/compartment, etc.); (c) starting and/or stopping an engine or a motor of the vehicle 404 (e.g. controlling the ignition of a petrol/diesel engine or starting/stopping an electric drive motor of an electric vehicle); (d) operating an auxiliary system of the vehicle 404 (e.g. flashing lights or making a noise to enable a user to locate the vehicle 404; controlling an air conditioning system of the vehicle 404; controlling an audio/visual/entertainment system of the vehicle 404; etc.); (e) etc. Since in-vehicle digital key systems, corresponding predetermined vehicle digital key specifications, and keyless vehicle functions are well-known (as have been described above), they shall not be described in more detail herein.

Embodiments of the invention aim to enable vehicle OEM's to deploy their in-vehicle digital key systems without a dependency on the mobile device OEM - i.e. the vehicle OEM can manufacture/provide vehicles 404 that have vehicle functionality (such as locking/unlocking, engine/motor starting/stopping, etc.) controlled by a control system 406 at the mobile device 402, where the control system 406 is independent of (or agnostic of) the mobile device OEM (i.e. does not require specific functionality to be provided by, or exposed by, the mobile device OEM for provision of digital key functionality). As discussed above, this provides numerous technical advantages, such as: users being able to use whichever brand of mobile device 402 they wish in conjunction with the vehicle 404 (and users not having to purchase a different mobile device 402 to ensure compatibility with a newly purchased vehicle 404); users being able to use legacy mobile devices for which mobile device OEMs do not support digital key functionality; easier integration, maintenance and support at the vehicle OEM (the vehicle OEM does not need to integrate with and support multiple proprietary systems or requirements of multiple mobile device OEMs), etc.

Therefore, the mobile device 402 has a control system 406 for controlling the digital key system of the vehicle 404. In particular, the control system 406 may be implemented in software (i.e. as one or more instructions and/or one or more computer programs and/or one more modules). When executed by a processor of the mobile device 402, the control system 406 is arranged to:
(a) communicate, in accordance with the predetermined vehicle digital key specification, with the digital key system of the vehicle 404 via at least one short range communication protocol to cause performance of at least one of the one or more vehicle functions; and
(b) provide a secured software runtime environment at the mobile device 402 for the control system 406 to perform one or more secured operations, the one or more secured operations including the control system 406 acting as a software root of trust, in accordance with the predetermined vehicle digital key specification, for performance of at least one of the one or more vehicle functions.

Details of this provision of this functionality by the control system 406 shall be described later.

The one or more secured operations may be any functions for implementing functionality of the predetermined vehicle digital key specification or for keyless vehicle functions. For example, the one or more secured operations may include one or more of:
(a) authenticating an identity of the vehicle 404 and/or an identity of the digital key system in accordance with the predetermined vehicle digital key specification;
(b) enabling the digital key system to authenticate an identity of the mobile device 402 and/or an identity of the control system 406 in accordance with the predetermined vehicle digital key specification;
(c) sharing a digital key secured, at least in part, by the control system 406 with another mobile device;
(d) digital key management for one or more cryptographic keys used in accordance with the predetermined vehicle digital key specification; and
(e) secured storage of data used for performance of at least one of the one or more vehicle functions.

In some embodiments, the control system 406 may optionally be arranged to communicate with one or more servers 410, 412 (or server systems) via one or more communication networks 408 (such as one or more of: the internet, a telecommunications network, a satellite communications network, a local area network, etc.) The purpose of the one or more servers 410, 412 shall be described later.

As will be described in more detail later, in some embodiments, the control system 406 is arranged to interact with, or expose an interface to, another application 414 installed on the mobile device 402.

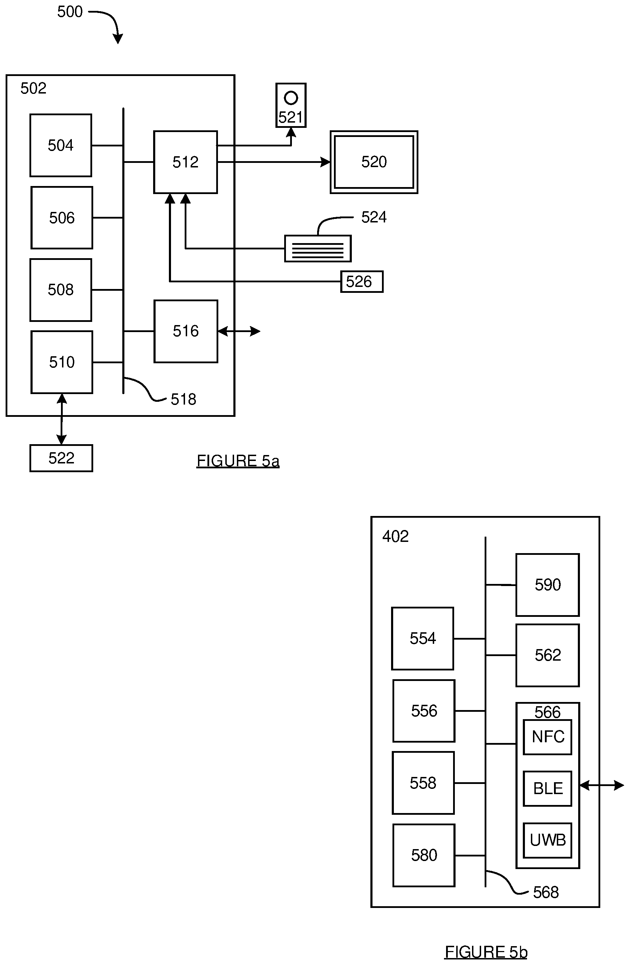

Figure 5a schematically illustrates an example hardware implementation of a computer system 500 suitable for each of the one or more servers 410, 412. The system 500 comprises a computer 502. The computer 502 comprises: a storage medium 504, a memory 506, a processor 508, a device interface 510, a user interface 512 and a network interface 516. Each of these components may be arranged to communicate with one or more of the other components via one or more communication buses 518 of the computer 502.

The storage medium 504 may be any form of non-volatile data storage device such as one or more of a hard disk drive, a magnetic disc, a solid-state-storage device, an optical disc, a ROM, etc. The storage medium 504 may store an operating system for the processor 508 to execute in order for the computer 502 to function. The storage medium 504 may also store one or more computer programs (or software or instructions or code).

The memory 506 may be any random access memory (storage unit or volatile storage medium) suitable for storing data and/or computer programs (or software or instructions or code).

The processor 508 may be any data processing unit suitable for executing one or more computer programs (such as those stored on the storage medium 504 and/or in the memory 506), some of which may be computer programs according to embodiments of the invention or computer programs that, when executed by the processor 508, cause the processor 508 to carry out a method according to an embodiment of the invention and configure the system 500 to be a system according to an embodiment of the invention. The processor 508 may comprise a single data processing unit or multiple data processing units operating in parallel, separately or in cooperation with each other. The processor 508, in carrying out data processing operations for embodiments of the invention, may store data to and/or read data from the storage medium 504 and/or the memory 506.

The device interface 510 may be any unit for providing an interface to a device 522 external to, or removable from, the computer 502. The device 522 may be a data storage device, such as one or more of an optical disc, a magnetic disc, a solid-state-storage device, etc. The device 522 may have processing capabilities - for example, the device 522 may be a smart card. The device interface 510 may therefore access data from, or provide data to, or interface with, the device 522 in accordance with one or more commands that it receives from the processor 508.

The user interface 512 is arranged to receive input from a user, or operator, of the system 500. The user may provide this input via one or more input devices of the system 500, such as a mouse (or other pointing device) 526 and/or a keyboard 524, that are connected to, or in communication with, the user interface 512. However, it will be appreciated that the user may provide input to the computer 502 via one or more additional or alternative input devices (such as a touch screen). The computer 502 may store the input received from the input devices via the user interface 512 in the memory 506 for the processor 508 to subsequently access and process, or may pass it straight to the processor 508, so that the processor 508 can respond to the user input accordingly.

The user interface 512 is also arranged to provide a graphical/visual and/or audio output to a user, or operator, of the system 500. As such, the processor 508 may be arranged to instruct the user interface 512 to form an image/video signal representing a desired graphical output, and to provide this signal to a monitor (or screen or display unit) 520 of the system 500 that is connected to the user interface 512. Additionally or alternatively, the processor 508 may be arranged to instruct the user interface 512 to form an audio signal representing a desired audio output, and to provide this signal to one or more speakers 521 of the system 500 connected to the user interface 512.

Finally, the network interface 516 provides functionality for the computer 502 to download data from and/or upload data to one or more data communication networks. This may be via wired and/or wireless communication.

It will be appreciated that the architecture of the system 500 illustrated in figure 5a and described above is merely exemplary and that other computer systems 500 with different architectures (for example with fewer components than shown in figure 5a or with additional and/or alternative components than shown in figure 5a) may be used in embodiments of the invention. As examples, the computer system 500 could comprise one or more of: a personal computer; a server computer; etc. Additionally, it is possible that some components of the computer system 500 are not located in the computer 502 and are, instead, part of a computer network connected to the computer 502 via the network interface 516. Additionally or alternatively, the computer system 500 may comprise multiple computers 502, e.g. in a network of computers such as a cloud system of computing resources.

Figure 5b schematically illustrates an example hardware implementation of the mobile device 402. The mobile device 402 comprises: a storage medium 554, a memory 556, a processor 558, a secure element 580, a telecommunications module 590, a user interface 562 and a short-range (radio) communications module 566. Each of these components may be arranged to communicate with one or more of the other components via one or more communication buses 568 of the mobile device 402.

The storage medium 554 may be any form of non-volatile data storage device such as one or more of a solid-state-storage device, a ROM, etc. The storage medium 504 may store an operating system for the processor 558 to execute in order for the mobile device 402 to function. The storage medium 554 may also store one or more computer programs (or software or instructions or code).

The memory 556 may be any random access memory (storage unit or volatile storage medium) suitable for storing data and/or computer programs (or software or instructions or code).

The processor 558 may be any data processing unit suitable for executing one or more computer programs (such as those stored on the storage medium 554 and/or in the memory 556), some of which may be computer programs according to embodiments of the invention or computer programs that, when executed by the processor 558, cause the processor 558 to carry out a method according to an embodiment of the invention and configure the mobile device 402 to be a system according to an embodiment of the invention. The processor 558 may comprise a single data processing unit or multiple data processing units operating in parallel, separately or in cooperation with each other. The processor 558, in carrying out data processing operations for embodiments of the invention, may store data to and/or read data from the storage medium 554 and/or the memory 556.

Secure elements 580 are often provided by mobile device OEMs in the mobile devices that they manufacture. The secure element 580 provides tamper-resistant hardware, and is for providing/enabling secured processing and data storage functionality to the mobile device 402 (e.g. secure storage of cryptographic keys, secured execution of cryptographic operations such as encryption, decryption, signature generation and verification, etc). Further details of secure elements (SEs) can be found, for example, at https://en.wikipedia.org/wiki/Secure_element, the entire disclosure of which is incorporated herein by reference. Secure elements 580 are often used by device OEMs to support cryptographic operations in the device OEMs' proprietary solutions for providing keyless vehicle functionality.

The telecommunications module 590 may be arranged to perform telecommunications according to any of the well-known telecommunications protocols/standards, such as one or more standards provided by the International Telecommunication Union (ITU).

The user interface 562 is arranged to receive input from a user, or operator, of the mobile device 402. The user may provide this input via one or more mechanisms, such as a touch screen of the mobile device 402, a microphone of the mobile device 402 for receiving audio/speech input from the user, a keyboard forming part of the mobile device 402, etc. However, it will be appreciated that the user may provide input to the mobile device 402 via any other mechanism. The mobile device 402 may store the input received via the user interface 562 in the memory 556 for the processor 558 to subsequently access and process, or may pass it straight to the processor 558, so that the processor 558 can respond to the user input accordingly.

The user interface 562 is also arranged to provide a graphical/visual and/or audio output to a user, or operator, of the mobile device 402. As such, the processor 558 may be arranged to instruct the user interface 562 to form an image/video signal representing a desired graphical output, and to provide this signal to a screen of the mobile device 402. Additionally or alternatively, the processor 558 may be arranged to instruct the user interface 562 to form an audio signal representing a desired audio output, and to provide this signal to one or more speakers of the mobile device 402.

Finally, the short-range (radio) communications module 566 comprises one or more transceivers for performing short-range wireless communication via one or more respective protocols, such as one or more of: (a) a near field communication (NFC) protocol; (b) a Bluetooth Low Energy (BTLE) protocol; (c) an Ultra-Wideband (UWB) protocol; (d) etc.

It will be appreciated that the architecture of the mobile device 402 illustrated in figure 5b and described above is merely exemplary and that other mobile devices 402 with different architectures (for example with fewer components than shown in figure 5b or with additional and/or alternative components than shown in figure 5b) may be used in embodiments of the invention. As examples, the mobile device 402 could comprise one or more of: a smartphone; a tablet; a personal digital assistant; a smartwatch; etc.

As mentioned above, with embodiments of the invention, the control system 406 of the mobile device 402 is arranged communicate, in accordance with the predetermined vehicle digital key specification, with the digital key system of the vehicle 404 via at least one short range communication protocol to cause performance of at least one of the one or more vehicle functions. For this, the control system 406 makes use of the short-range (radio) communications module 566, so that data/commands may be communicated between the control system 406 and the digital key system of the vehicle 404 via one or more transceivers of the short-range (radio) communications module 566 and one or more corresponding transceivers of the vehicle 404.

Some mobile device OEMs arrange for data received at a transceiver of the short-range (radio) communications module 566 to be routed directly to the secure element 580 for subsequent processing, rather than being routed to the processor 558, the storage medium 554 or the memory 556. This may apply to some or all of the short-range communication protocols being used by the mobile device 402 - for example, under the Android Framework, data received via NFC is routed to the secure element 480, whereas Android does not route data received via BLE and UWB in this way and allows third party applications to access the interface to BLE and UWB transceivers to obtain data therefrom. Routing data directly to the secure element 480 is often a deliberate choice by mobile device OEMs, to ensure security of data/communications/processing when the short-range (radio) communications module 566 is expected to be used for handling sensitive information (e.g. payment transactions via NFC). Therefore, in view of the above-discussed aim of trying to make the control system 406 independent of the mobile device OEM's implementations/approaches, in some embodiments of the invention, the control system 406 is arranged to cause data received from the vehicle 404 via the at least one short range communication protocol to be routed to the control system 406 instead of being routed to the secure element 580 of the mobile device 402. This may be achieved in a variety of ways. For example, the control system 406 may be arranged perform host card emulation to enable communication of data from a transceiver of the mobile device 402 that implements the at least one short range communication protocol (e.g. the NFC or BLE or UWB transceiver of the short-range (radio) communications module 566) to the control system 406. Host card emulation is well-known - see, for example https://en.wikipedia.org/wiki/Host_card_emulation, the entire disclosure of which is incorporated herein by reference. The communication of data between the control system 406 and the digital key system of the vehicle 404 is still secured (e.g. by security/encryption mechanism/protocols set out in the predetermined vehicle digital key specification) - it is just that such secured data received at the mobile device 402 may be routed to the control system 406 instead of to the secure element 480, thereby removing dependency on the mobile device OEM's implementation, and limited exposed use of, the secure element 480.

It is, of course, important that the control system 406 is implemented in a secured manner - after all, if an attacker (or malicious entity) is able to obtain unauthorized access to, or use, of the control system 406, then the attacker may be able to gain unauthorized access to, or use, of the vehicle 404, share digital keys with other mobile devices in an unauthorized manner, prevent the legitimate user of the mobile device 402 or of the vehicle 404 from being able to access or operate the vehicle 404, etc.

A mobile device OEM may be able to provide their own security, such as by providing functionality via a proprietary operating system executing on the mobile device 402, or functionality installed by the mobile device OEM with the secure element 580 of the mobile device 402 (as limited to mobile devices 402 made by that OEM). However, in view of the above-discussed aim of trying to make the control system 406 independent of the mobile device OEM's implementations/approaches, the control system 406 according to embodiments of the invention is preferably arranged to perform the one or more secured operations independent of any keyless vehicle control functionality provided by the manufacture (OEM) of the mobile device 402. Likewise, the control system 406 according to embodiments of the invention is preferably arranged to perform the one or more secured operations independent of any keyless vehicle control functionality provided as part of an operating system of the mobile device 402. Likewise, the control system 406 according to embodiments of the invention is preferably arranged to perform the one or more secured operations without using the secure element 580 of the mobile device 402 for: (a) storage of data used for the control of the digital key system; and (b) execution of instructions for implementing the control of the digital key system. With that in mind, the control system 406 executes as a software application (on the processor 558, i.e. outside of the secure element 580) and separate from keyless vehicle control functionality provided by the mobile device OEM or provided by the operating system of the mobile device 402.

With that in mind, as mentioned above, the control system 406 is arranged to provide a secured software runtime environment at the mobile device 402 for the control system 406 to perform one or more secured operations, the one or more secured operations including the control system 406 acting as a software root of trust, in accordance with the predetermined vehicle digital key specification, for performance of at least one of the one or more vehicle functions. The provision of this secured software runtime environment may be provided in a number of different ways, such as provided based on one or more of:
(a) the control system 406 being (or having been) implemented or protected, at least in part, using whitebox cryptography for (i) securing storage of some or all of the data used for the control of the digital key system; and/or (ii) securing some or all of the instructions used to implement the control system 406;
(b) the control system 406 being (or having been) implemented, at least in part, using obfuscation of one or more of: (i) instructions used to implement the control system 406; (ii) control flow for the control system 406; and (iii) runtime data of the control system 406;
(c) the control system 406 comprising one or more secure storage functions for performing secure storage of one or more cryptographic keys and/or sensitive data;
(d) the control system 406 being arranged to perform node locking to lock execution of the control system 406 to the mobile device 402;
(e) the control system 406 being arranged to perform integrity verification for the control system 406 and/or the digital key system of the vehicle 404; and
(f) the control system 406 being arranged to perform anti-debug functionality.

For example, the control system 406 may be viewed as executing in a so-called "white-box" attack environment. The white-box attack environment is an attack model for the execution of an item of software (such as the control system 406), in which the model identifies that an attacker has various capabilities as described in more detail below (i.e. the attacker can carry out certain actions/operations and has access to certain data). Therefore, if an attacker would have those capabilities when the item of software is actually being executed in a particular execution environment (e.g. using a particular computer/processor etc.) then one may say that the item of software is executing in a "white-box" environment. In the white-box attack environment, the attacker of the item of software is assumed to have full access to, and visibility of, the data being operated on (including intermediate values), memory contents and execution/process/control flow of the item of software. Moreover, in the white-box attack environment, the attacker is assumed to be able to modify the data being operated on, the memory contents and the execution/process/control flow of the item of software, for example by using a debugger - in this way, the attacker can experiment on, and try to manipulate the operation of, the item of software, with the aim of circumventing initially intended functionality and/or identifying secret information and/or for other purposes.

However, the item of software may need to use or store or generate secret information (e.g. one or more cryptographic keys or identifiers), where this information needs to remain hidden from, or unusable/inaccessible by, the attacker (except as part of the correct/intended functionality of the item of software); the item of software may need to execute different portions of code based on particular decision logic, where it is important to ensure that an attacker cannot force the software to execute one portion of code instead of another portion of code in contradiction to the decision logic; etc. This is particularly true for the control system 406 in its performance of operations for the keyless vehicle functionality. The set-up, configuration and capabilities of the system on which such an item of software is to execute are not necessarily known (or fully known) to, and/or are not controllable (or fully controllable) by, the provider of the item of software, and so it can be assumed that the item of software may end up being executed in a white-box attack environment. This is particularly relevant when the item of software is written in a scripted or interpreted language, such as JavaScript, due to the human-readable nature of scripted or interpreted languages (as opposed to, say, compiled binary executable files) - an attacker can easily view, monitor and modify execution of such items of software (e.g. during interpretation or after just-in-time compilation), which makes it easy for an attacker to copy and modify the item of software and/or its data or control flow in an attempt to launch an attack against/using the item of software. This is why numerous software protection techniques have been developed - such protection techniques may be applied to the item of software in order to generate a protected item of software with the aim to make it difficult for an attacker to carry out a successful attack on the protected item of software, and/or with the aim to reduce/mitigate the consequences of such an attack by an attacker - i.e. the protection techniques aim to secure an initial item of software against the white-box attack environment.

With that in mind, the control system 406 is an item of software to which one or more such software protection techniques have been applied, thereby ensuring that the control system 406 can provide the secured software runtime environment - i.e. it is a protected item of software which is, therefore, capable of execution by the processor 558 of the mobile device 402 and without needing to rely on hardware security provided by the secure element 580. Numerous such software protection techniques (referred to herein as "protections") may be used for implementing the control system 406 so that the control system 406 is arranged to provide the secured software runtime environment, such as one or more of cloaking techniques, homomorphic data transformation, control flow transformation, white-box cryptography, key hiding, program interlocking and boundary blending. For example:
- There are numerous techniques, referred to herein as "white-box obfuscation techniques", for transforming an initial item of software so that it is resistant to white-box attacks (i.e. attacks that could be launched, or are available, under the white-box attack environment). Examples of such white-box obfuscation techniques can be found, in "White-Box Cryptography and an AES Implementation", S. Chow et al, Selected Areas in Cryptography, 9th Annual International Workshop, SAC 2002, Lecture Notes in Computer Science 2595 (2003), p250-270 and *"*A White-box DES Implementation for DRM Applications", S. Chow et al, Digital Rights Management, ACM CCS-9 Workshop, DRM 2002, Lecture Notes in Computer Science 2696 (2003), p1-15, the entire disclosures of which are incorporated herein by reference. Additional examples can be found in US61/055,694, EP4024755, EP3998738, WO2021/032792 and WO2009/140774, the entire disclosures of which are incorporated herein by reference. Some white-box obfuscation techniques (such as those described above and others set out below) enable storage and/or use, and possibly manipulation of, secret/sensitive data (such as cryptographic keys) in a transformed/secured manner from which it is difficult/impossible for an attacker to access or derive the underlying secret/sensitive data. Some white-box obfuscation techniques implement data flow obfuscation - see, for example, US7,350,085, US7,397,916, US6,594,761 and US6,842,862, the entire disclosures of which are incorporated herein by reference. Some white-box obfuscation techniques implement control flow obfuscation - see, for example, US6,779,114, US6,594,761 and US6,842,862 the entire disclosures of which are incorporated herein by reference. However, it will be appreciated that other white-box obfuscation techniques exist and that embodiments of the invention may use any white-box obfuscation techniques.
- As another example, it is possible that an initial item of software may be intended to be provided (or distributed) to, and used by, a particular computer system (or a particular set of computer systems) and that it is, therefore, desirable to "lock" the initial item of software to the particular computer system(s), i.e. to prevent the initial item of software (once protected) from executing on another computer system. Consequently, there are numerous techniques, referred to herein as "node-locking" protection techniques, for transforming the initial item of software so that the protected item of software can execute on (or be executed by) one or more predetermined/specific computer systems but will not execute on other computer systems. Examples of such node-locking techniques can be found in WO2012/126077, the entire disclosure of which is incorporated herein by reference. However, it will be appreciated that other node-locking techniques exist and that embodiments of the invention may use any node-locking techniques. Such node-locking techniques are useful to help ensure that the control system 406 will only execute on an intended mobile device 402 (so that control system 406, with an embedded digital key, cannot be copied to another mobile device 402 with a view to using that other mobile device 402 as a "clone" key for the vehicle 404).
- Various methods are known for checking the integrity/correctness of the instructions of an item of software and/or the data being operated on or generated by the item of software. Some such checks may be performed at load-time (i.e. static checks) whilst other such checks may be performed in an on-going manner during runtime execution of the item of software (i.e. dynamic checks). Such checks help confirm that the item of software and/or the data being used have not been tampered with. Examples of such integrity verification techniques can be found, for example, in WO2015/149828, WO2018/108275, EP3649553, the entire disclosures of which are incorporated herein by reference.
- Numerous examples of methods and systems for applying protection techniques to an item of software can be found, for example, in WO2015/150391 and WO2015/150376, the entire disclosures of which are incorporated herein by reference.
- Further examples of protection techniques that may be applied can be found in WO2013/142981, WO2013/142979, WO2013/142983 and WO2013/142980, the entire disclosures of which are incorporated herein by reference.

As mentioned above, the control system 406 is arranged to act as the software root of trust. This enables operations to be performed for functions of the predetermined vehicle digital key specification and for the keyless vehicle functionality in a secured/authenticated manner, using cryptographic keys of the control system 406 (which may, for example, be stored or implemented in an obfuscated manner within the control system 406, such as using the above-discussed white-box protections). In particular, acting as the software root of trust may comprise storing one or more cryptographic keys; and using the one or more cryptographic keys to authenticate one or more digital signatures and/or to issue one or more digital certificates. For example, this could be used to authenticate data signed by the digital key system of the vehicle 404 or to generate digital certificates for the vehicle 404 to use and/or for another mobile device to use in order to share the digital key for the vehicle 404 (e.g. sharing the digital key with a friend device as discussed above with respect to figure 1). Having the control system 406 act as a root of trust enables the digital key functionality to be performed even when the mobile device 402 does not have communications access to the network 408 - i.e. the control system 406 does not need to rely on having access to a server 410, 412 (so that, for example, a door of the vehicle 404 can be opened even when the mobile device 402 does not have a network connection).

In some embodiments, the control system 406 serves to operate as a keyless fob, such as for unlocking a vehicle when the mobile device 402 is brought into proximity to the vehicle 404.

In some embodiments, the control system 406 exposes an API configured for receiving, from an application 414 that is user-installable on the mobile device 402, a command for the control system 406 to cause performance of at least one of the one or more vehicle functions. Such an application 414 may allow for a user to provide input, with the commands being generated by the application 414 based on, or in accordance with, the user input - for example, a command to unlock or lock a door of the vehicle 404, a command to start or stop an engine/motor of the vehicle 404, etc. Thus, the command may be based on input provided to the application 414 by a user of the mobile device 402. The application 414 may be a native application for the mobile device 402 (e.g. downloaded by the user of the mobile device 402 from an app store). In some embodiments, the application 414 is provided, at least in part, by a manufacturer of the vehicle 404 - thus, the application 414 may be provided by the manufacturer of the vehicle 404 to allow an owner/user of the vehicle 404 to perform/control the one or more vehicle functions (e.g. by providing a suitable user interface for the owner/user to provide commands/control via the application 414).

In some embodiments, the application 414 is separate from the control system 406. In other embodiments, the control system 406 forms a subsystem (e.g. a component/module/etc.) of the application 414, so that the control system 406 is installed on the mobile device 402 along with the application 414.

In some embodiments, the server 410 is a server (or part of a system) operated by the manufacturer of the vehicle 404. Thus, the control system 406 and/or the application 414 may be arranged to communicate with the manufacturer server 410 (e.g. via the network 408) - this may be, for example, to enable manufacturer-specific/provided functionality via the application 414 (e.g. if the application 414 was provided by the manufacturer of the vehicle 404); additionally or alternatively, this may be, for example, to enable functionality according to the predetermined vehicle digital key specification (e.g. in order to be able to perform one or more functions specified by the predetermined vehicle digital key specification). Additionally or alternatively, in some embodiments, the server 412 is a server (or part of a system) operated by a third party (i.e. different from the manufacturer of the vehicle 404). Thus, the control system 406 and/or the application 414 may be arranged to communicate with the third party server 412 (e.g. via the network 408) - this may be, for example, to enable specific functionality via the application 414 (e.g. if the application 414 was provided by the third party); additionally or alternatively, this may be, for example, to enable functionality according to the predetermined vehicle digital key specification (e.g. in order to be able to perform one or more functions specified by the predetermined vehicle digital key specification). As an example of functionality that may be provided via the server 410 and/or the server 412, the control system 406 may be arranged to bind with the vehicle 404 (for example, as part of an initial setup procedure according to a short range communication protocol being used), with this binding being controlled by the server 410 and/or 412 in communication with the control system 406. Thus, initial security setup/provisioning may be performed in a more remote/secure location, to help prevent unauthorized binding of mobile devices 402 with the vehicle 404.

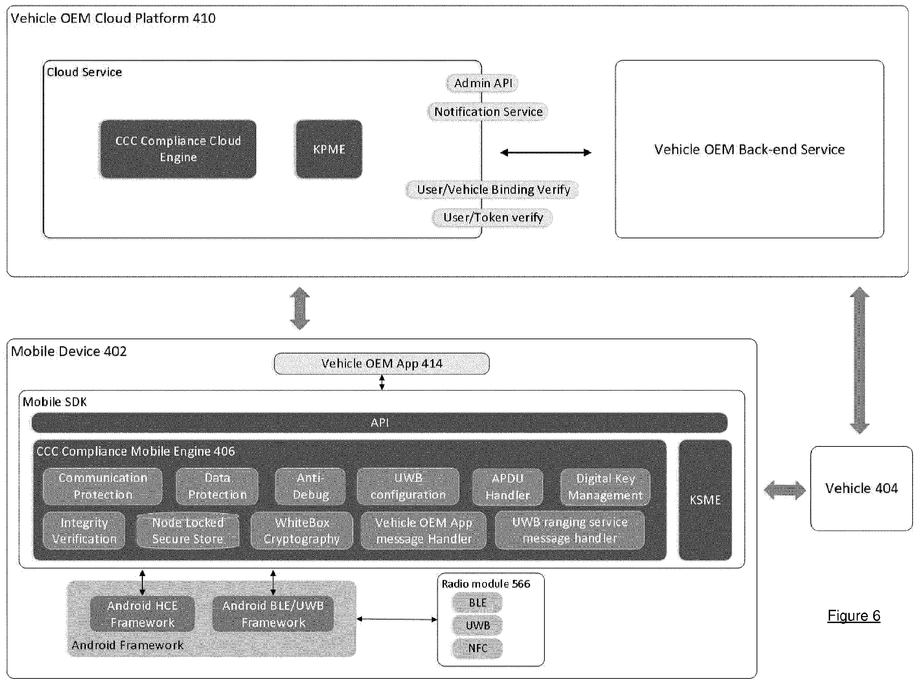

Figure 6 schematically illustrates a specific example of an embodiment of the invention, configured for use with the Android operating system of a mobile device 402 in relation to a CCC system - it will, of course, be appreciated that other operating systems and examples of the predetermined vehicle digital key specification can be used with embodiments of the invention. As discussed, embodiments of the invention remove the device OEM's dependency for vehicle OEM's CCC deployment (the device side's Digital Key Framework / Digital Key Applet / Secure Element and device OEM's cloud services). Compared with the traditional CCC architecture, the example system in figure 6 provides two components, that is a "CCC Compliant Mobile Engine" and a "CCC Compliant Cloud Engine" to implement the same functionalities that the CCC specification defines for the device OEM.

In particular, in this example, the CCC Compliant Mobile Engine is based on software security technology (e.g. Irdeto Cloakware technology) and the Android OS framework opened capabilities to implement a "Soft CCC Compliant" secure SDK on the mobile device 402 for integration with the Vehicle OEM Application 414.

The CCC Compliant Mobile Engine may provide one or more features, such as:
- Use of software security technology (such as Irdeto Cloakware technology) - such as whitebox cryptography, secure store, transcode, data transform, anti-debug, anti-hook, static and dynamic integrity verification - to build (or provide) the secure software runtime environment.
- Use of Android framework's HCE (host card emulation) feature (available from Android 4.4) to emulate a card and communicate directly to the NFC reader of the mobile device 402. When an NFC card is emulated using host-based card emulation, data is routed directly to the host CPU instead of being routed to a secure element of the host (the mobile device 402).
- Use of Android framework's BLE feature, to manage the BLE communication with the vehicle 404.
- If the Android framework provides the UWB feature, the CCC Compliant Mobile Engine can also manage the UWB ranging service with the vehicle 404.
- Implement the main vehicle digital key features, such as: owner pairing, digital key sharing, and management.
- Implement relevant (fast and standard) transactions.
- Store immobilizer tokens when required by the vehicle 404, offline attestations, access profiles, and other data associated with a digital key.
- Verify authenticity of the vehicle 404.
- Implement the Vehicle OEM's premium digital car key (DCK) features.
- Provide secured communication with the "CCC Compliant Cloud Engine" based on a communication protection and data protection security mechanism.

The CCC Compliant Cloud Engine may operate, for example, at the server 410 to provide a cloud service. This cloud service may provide one or more features, such as:
- Implement the CCC specification (such as section 17 - Server to server communication and API of release 3.0 of the CCC specification) defined device OEM cloud APIs to do integration with the Vehicle OEM's back-end to support the key sharing / key tracking / key termination / notifications features. Or it may implement proprietary protocols of the Vehicle OEM to simplify the key management and to support the Vehicle OEM's premium DCK features
- Digital key creation and distribution to the "CCC Compliant Mobile Engine". Cloud side key creation is more secure compared to the client-side key creation. However it will be appreciated that creation of the digital key(s) may be performed client-side instead (i.e. at the "CCC Compliant Mobile Engine").
- Ease the key sharing process and enhance the key share process's security

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or one or more graphical processing units (GPUs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then one or more storage media and/or one or more transmission media storing or carrying the computer program form aspects of the invention. The computer program may have one or more program instructions, or program code, which, when executed by one or more processors (or one or more computers), carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, byte code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## Claims

1. A control system for use at a mobile device to control a digital key system of a vehicle, wherein the digital key system is implemented according to a predetermined vehicle digital key specification to enable one or more vehicle functions to be performed at the vehicle without using a physical key for the vehicle, and wherein the control system, when executed by a processor of the mobile device, is arranged to:
communicate, in accordance with the predetermined vehicle digital key specification, with the digital key system via at least one short range communication protocol to cause performance of at least one of the one or more vehicle functions; and
provide a secured software runtime environment at the mobile device for the control system to perform one or more secured operations, the one or more secured operations including the control system acting as a software root of trust, in accordance with the predetermined vehicle digital key specification, for performance of at least one of the one or more vehicle functions.

2. The control system of claim 1, wherein:
(a) the control system is arranged to perform the one or more secured operations independent of any keyless vehicle control functionality provided by a manufacture of the mobile device; and/or
(b) the control system is arranged to perform the one or more secured operations independent of any keyless vehicle control functionality provided as part of an operating system of the mobile device; and/or
(c) the control system is arranged to perform the one or more secured operations without using a secure element of the mobile device for: (i) storage of data used for the control of the digital key system; and (ii) execution of instructions for implementing the control of the digital key system.

3. The control system of any one of the preceding claims, wherein the secured software runtime environment is provided based on one or more of:
(a) the control system being implemented, at least in part, using whitebox cryptography for (i) securing storage of some or all of the data used for the control of the digital key system; and/or (ii) securing some or all of the instructions used to implement the control system;
(b) the control system being implemented, at least in part, using obfuscation of one or more of: (i) instructions used to implement the control system; (ii) control flow for the control system; and (iii) runtime data of the control system;
(c) the control system comprising one or more secure storage functions for performing secure storage of one or more cryptographic keys and/or sensitive data;
(d) the control system being arranged to perform node locking to lock execution of the control system to the mobile device;
(e) the control system being arranged to perform integrity verification for the control system and/or the digital key system; and
(f) the control system being arranged to perform anti-debug functionality.

4. The control system of any one of the preceding claims, wherein the control system is arranged to cause data received from the vehicle via the at least one short range communication protocol to be routed to the control system instead of being routed to a secure element of the mobile device;
wherein, optionally, the control system is arranged perform host card emulation to enable communication of said data from a transceiver of the mobile device that implements the at least one short range communication protocol to the control system.

5. The control system of any one of the preceding claims, wherein the predetermined vehicle digital key specification specifies one or more protocols and/or one or more functions and/or one or more requirements that enable the one or more vehicle functions to be performed at the vehicle without using a physical key for the vehicle.

6. The control system of any one of the preceding claims, wherein:
(a) the predetermined vehicle digital key specification is one of: (i) a Car Connectivity Consortium specification; and (ii) an Intelligent Car Connectivity Industry Ecosystem Alliance specification; and/or
(b) the at least one short range communication protocol comprises at least one of: a near field communication (NFC) protocol; a Bluetooth Low Energy (BTLE) protocol; and an Ultra-Wideband (UWB) protocol.

7. The control system of any one of the preceding claims, wherein the one or more vehicle functions comprises one or more of:
(a) physical unlocking and/or physical locking of at least a part of the vehicle;
(b) physical opening and/or physical closing of at least a part of the vehicle;
(c) starting and/or stopping an engine or a motor of the vehicle; and
(d) operating an auxiliary system of the vehicle.

8. The control system of any one of the preceding claims, wherein the control system acting as the software root of trust comprises the control system:
storing one or more cryptographic keys; and
using the one or more cryptographic keys to authenticate one or more digital signatures and/or to issue one or more digital certificates.

9. The control system of any one of the preceding claims, wherein the control system exposes an API configured for receiving, from an application that is user-installable on the mobile device, a command for the control system to cause performance of at least one of the one or more vehicle functions;
wherein, optionally, the command is based on input provided to the application by a user of the mobile device.

10. The control system of claim 9, wherein:
(a) the application is a native application for the mobile device; and/or
(b) the application is provided, at least in part, by a manufacturer of the vehicle.

11. The control system of any one of the preceding claims, wherein the one or more secured operations include one or more of:
(a) authenticating an identity of the vehicle and/or an identity of the digital key system in accordance with the predetermined vehicle digital key specification;
(b) enabling the digital key system to authenticate an identity of the mobile device and/or an identity of the control system in accordance with the predetermined vehicle digital key specification;
(c) sharing a digital key secured, at least in part, by the control system with another mobile device;
(d) digital key management for one or more cryptographic keys used in accordance with the predetermined vehicle digital key specification; and
(e) secured storage of data used for performance of at least one of the one or more vehicle functions.

12. The control system of any one of the preceding claims, wherein the control system, when executed by the processor of the mobile device, is arranged to bind with the vehicle, said binding controlled by a server in communication with the control system.

13. The control system of any one of the preceding claims, wherein the mobile device is a smartphone.

14. An application, installable by a user on a mobile device, wherein the application:
(a) comprises the control system according to any one of claims 1 to 13; or
(b) is configured to provide, to the control system according to any one of claims 1 to 13, one or more commands for the control system to cause performance of at the least one of the one or more vehicle functions.

15. A mobile device comprising the control system according to any one of claims 1 to 13 and/or having installed thereon the application according to claim 14.

16. A computer readable medium storing a set of instructions that, together, implement the control system according to any one of claims 1 to 13.
